Europäisches Patentamt

European Patent Office

Office européen des brevets

(11) Veröffentlichungsnummer **0 158 692**

A1

(12) # EUROPÄISCHE PATENTANMELDUNG

(21) Anmeldenummer: 84104384.7

(22) Anmeldetag: 18.04.84

(51) Int. Cl.⁴: **B 23 D 79/02**
B 23 K 35/40, B 21 C 37/08

(43) Veröffentlichungstag der Anmeldung:
23.10.85 Patentblatt 85/43

(84) Benannte Vertragsstaaten:
AT BE CH DE FR GB IT LI LU NL SE

(71) Anmelder: Schweissindustrie Oerlikon Bührle AG
Birchstrasse 230
CH-8050 Zürich(CH)

(72) Erfinder: Eggler, Ernst
Riedhofstrasse 19
CH-8804 Au(CH)

(72) Erfinder: Pfenninger, Heinz
Etzelweg 15
CH-8604 Volketswil(CH)

(74) Vertreter: EGLI-EUROPEAN PATENT ATTORNEYS
Horneggstrasse 4
CH-8008 Zürich(CH)

(54) Verfahren und Maschine zur Bearbeitung eines bewegten Rohres an seiner Längsschweissnaht.

(57) An dem in Führungs- und Stützrollen (7) geführten, durchlaufenden Rohr (6) wird der über das Profil des Rohres (6) ragende Teil der Schweissnaht durch ein Schneidwerkzeug (17) abgetragen. Das Schneidwerkzeug ist durch einen, in einer Säulenführung (8,9) geführten Schlitten (10) und durch einen im Schlitten (10) mit einer Säulenführung (11, 12) horizontal geführten Werkzeugschlitten (15) verstellbar, derart, dass im Betrieb ohne Unterbrechung der Herstellung des Rohres (6) nach Abnützung eines Schneidenabschnittes ein benachbarter, intakter Abschnitt der Schneide des Schneidwerkzeuges zum Einsatz gebracht wird, Dadurch wird erreicht, dass eine lange, ununterbrochene Rohrherstellungsperiode gewährleistet werden kann.

Fig 1

Verfahren und Maschine zur Bearbeitung eines bewegten
Rohres an seiner Längsschweissnaht

---

Die Erfindung betrifft ein Verfahren zur Bearbeitung
eines kontinuierlich bewegten Rohres, das aus einem
endlosen, metallischen Band geformt und an seinen Längskanten zusammengeschweisst wird, an der beim Schweissen
gebildeten Längsschweissnaht, deren über das Rohrprofil
vorstehender Teil während des Durchlaufes des Rohres
an einer stationären Bearbeitungsstelle mit mindestens
einem Schneidwerkzeug abgetragen wird, und eine Maschine
zur Durchführung dieses Verfahrens.

Für die kontinuierliche Herstellung eines Rohres aus
einem endlosen, metallischen Band sind verschiedene
Verfahren bekannt. Im wesentlichen wird hierbei aus
einem, von einer Vorratsrolle abgewickelten endlosen,
metallischen Band ein nach oben offenes Schlitzrohr geformt, dessen Längskanten unter gleichzeitiger Erhitzung
zusammengepresst und dadurch verschweisst werden. Mit
diesem Verfahren werden Rohre verschiedenster Durchmesser hergestellt.

Dieses Verfahren wird auch dazu verwendet, Fülldrähte
herzustellen. Hierbei wird nach dem Formen des Schlitzrohres zunächst eine pulverförmige Materialfüllung eingebracht, worauf dann das Zusammenpressen der Längskanten, das Erhitzen und Zusammenschweissen derselben
durchgeführt wird. Die so mit einer Füllung versehenen
Rohre müssen in weiteren Operationen auf einen kleineren
Durchmesser verringert werden.

Bei einem bekannten Verfahren dieser Art (EP-A1-3 370) erfolgt die Verringerung des Rohrdurchmessers durch eine
Ziehoperation. Da aber beim Verschweissen der Längskanten
des Schlitzrohres eine Schweissnaht entsteht, deren Kuppe
über das Querschnittprofil des Rohres ragt, wird dieser
Teil zuerst abgetragen, bevor die Ziehoperation durchgeführt werden kann.

Nun erfolgt die Herstellung eines solchen Fülldrahtes in
einem ununterbrochenen Vorgang, so dass auch die Vorrichtung, mit der der vorstehende Teil der Längsschweissnaht
abgetragen wird, ebenfalls ununterbrochen im Einsatz
stehen muss. Es scheint nun naheliegend, das Abtragen
dieses vorstehenden Nahtteiles in einer spanenden Operation vorzunehmen. Es hat sich aber gezeigt, dass alle
hierzu verwendeten Schneidwerkzeuge keine ausreichende
Standzeit aufweisen, so dass umständliche Betriebsunterbrüche nicht zu vermeiden waren.

Hier setzt die Erfindung ein, der die Aufgabe zugrundeliegt, ein Verfahren der eingangs beschriebenen Art so
auszugestalten, dass das Schneidwerkzeug ohne Unterbrechung der Rohrfertigung über lange Zeitspannen einsetzbar ist.

Diese Aufgabe wird gemäss der Erfindung dadurch gelöst,
dass an dem Schneidwerkzeug ohne Unterbrechung der Herstellung des Rohres in vorbestimmten, von dem Grad der Abnützung eines jeweils im Einsatz stehenden Abschnittes
der Schneide des Schneidwerkzeuges abhängigen Zeitintervallen ein benachbarter, intakter Abschnitt der Schneide
zum Einsatz gebracht wird.

Die Erfindung umfasst weiter eine Maschine mit drehbar gelagerten Führungsrollen für das durchlaufende geschweisste
Rohr, mit der das erfindungsgemässe Verfahren mit geringem
Aufwand durchgeführt werden kann. Diese Aufgabe wird gemäss der Erfindung dadurch gelöst, dass an einem Maschinenständer ein Schlitten in einer vertikalen Schlittenführung
höheneinstellbar geführt ist, an dem in einer horizontalen
Schlittenführung ein Werkzeugschlitten seiteneinstellbar
geführt ist, der einen Werkzeughalter mit mindestens einem
Schneidwerkzeug trägt.

Die Erfindung ist in der Zeichnung in einem Ausführungsbeispiel dargestellt und nachfolgend beschrieben. Es
zeigen:

Fig. 1      Eine Seitenansicht einer Maschine zum Abtragen
            des vorstehenden Teils der Längsschweissnaht
            eines kontinuierlich gefertigten Rohres,

Fig. 2      eine Vorderansicht der Maschine in Fig. 1 und

Fig. 3      einen vergrösserten Teilausschnitt des das Ab-
            tragen des vorstehenden Nahtteils durchführen-
            den Schneidwerkzeuges.

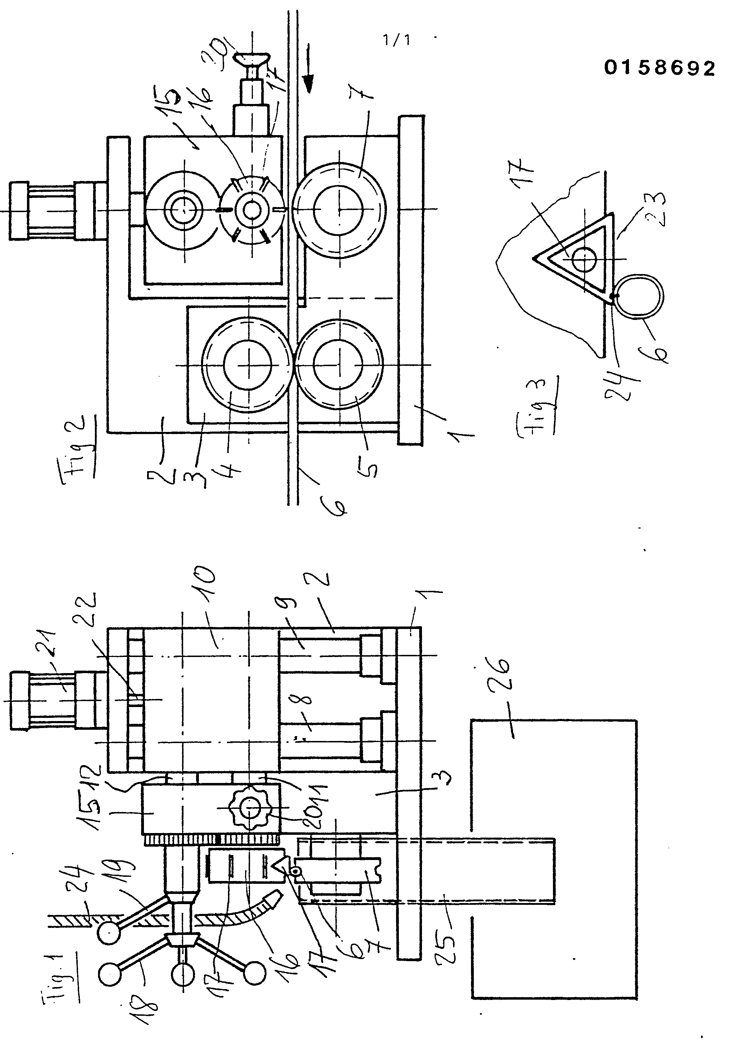

Die in Fig. 1 und 2 dargestellte Maschine weist eine
Fundamentplatte 1 auf, auf der ein Maschinenständer 2
abgestützt ist. Dem Maschinenständer 2 ist ein, ebenfalls auf der Fundamentplatte 1 abgestütztes Lagergehäuse 3 zugeordnet, in dem ein aus zwei Profilwalzen
4, 5 bestehendes Walzenpaar als Führung für ein durchlaufendes Rohr 6 und eine Stützwalze 7 zum Abstützen
des Rohres 6 drehbar gelagert sind. Es können gegebenenfalls mehr als ein Walzenpaar eingesetzt werden,
um das an einer Schweissstation zusammengeschweisste
und zu der in Fig. 1 und 2 dargestellten Maschine bewegte Rohr 6 zuverlässig zu führen und zu stützen. Die
Richtung der Rohrbewegung ist in Fig. 2 durch einen
Pfeil angedeutet.

Der Maschinenständer 2 weist eine Säulenführung mit
zwei vertikal verlaufenden Säulen 8, 9 auf, an der ein
Schlitten 10 längsverstellbar geführt ist. Im Schlitten
10 ist eine weitere Säulenführung mit zwei horizontalen
Säulen 11, 12 gelagert. An den Säulen 11, 12 ist ein
Werkzeugschlitten 15 fest gelagert und zusammen mit den
Säulen 11, 12 in dem Schlitten 10 seitenverstellbar gelagert.

Im Werkzeugschlitten 15 ist ein Schneidkopf 16 befestigt,
der als drehbar gelagerter Revolverkopf ausgebildet ist
und eine Anzahl Schneidwerkzeuge 17 trägt. Die Schneidwerkzeuge 17 können Schneidstähle oder Schneideinsätze
aus Hartmetall, siehe Fig. 3, sein.

Bedienungshebel und -griffe 18, 19, 20 dienen zur Einstellung der Maschine.

Die beschriebene Maschine arbeitet wie folgt:

Für die Höheneinstellbarkeit des Schlittens 10 wird ein
Hubgerät 21, beispielsweise ein Hydraulik- oder Pneumatik-Zylinder eingesetzt, der auf dem Maschinenständer 2 angeordnet ist und mit seiner Kolbenstange 22 mit dem
Schlitten 10 verbunden ist. Das Hubgerät 21, das von einer
Steuerung (nicht dargestellt) betätigt wird, hat die Aufgabe, das Schneidwerkzeug 17 bei Nichtbetrieb anzuheben
und bei Beginn des Schweissens des Rohres 6 das Schneidwerkzeug 17 abzusenken und dann langsam in die vorgegebene
Schneidstellung zu bringen. Es wird hierbei eine Genauigkeit der Einstellung des Schneidwerkzeuges von etwa
0,05 mm verlangt und auch ohne Schwierigkeit erreicht.
Das Schneidwerkzeug 17, siehe Fig. 3, wird nur mit einem
Abschnitt seiner Schneide 23 in die Schneidstellung gebracht. Dieser Abschnitt der Schneide trägt zunächst den
vorstehenden Teil der Schweissnaht 24, siehe Fig. 3 solange ab, bis eine vorbestimmte Standzeit verstrichen
ist, worauf der Schlitten 15 mittels des Handgriffes 18
nach der Seite verschoben wird, derart, dass die Schneide
23 des Werkzeuges 17 mit einem neuen Abschnitt der
Schneide 23 im Eingriff steht. Das Verschieben der
Schneide 23, ohne dass die übrige Einstellung des
Schneidwerkzeuges 17 geändert wird, erfolgt solange, bis
die Schneide 23 auf ihrer ganzen Länge eingesetzt wurde.
Nun wird mittels des weiteren Handgriffes 19 und des
Indexierbolzens 20 der Schneidkopf 16 um eine Teilung
gedreht, und dadurch ein neues Schneidwerkzeug 17
in Eingriff gebracht.

Durch eine Kühl- und Schneidmittelzufuhr 24 werden die
Arbeitsbedingungen an der Schneide 23 verbessert. Dadurch
ist es möglich, das Schweissen des Rohres während längerer
Zeit ohne Unterbruch durchzuführen. Aber auch der Uebergang
von der einen Schneide auf die andere benötigt nur wenig
Zeit. Erst wenn alle Schneidwerkzeuge 17 eingesetzt worden
sind, entsteht ein etwas grösserer Unterbruch, wenn der
Schneidkopf 16 durch einen neuen Schneidkopf ersetzt werden muss.

Der Spanwinkel, d.h. der Winkel zwischen Schneidenbrust und
der Normalen zur Bewegungsrichtung des Rohres, kann mittels
axialer Entlastung von Spannringen eingestellt werden. Der
Werkzeughalter 16 wird dadurch auf der Säulenführung 11
frei drehbar. Diese Einstellung des Spanwinkels ist von
Bedeutung, da damit eine Schneidenstellung eingestellt
werden kann, bei der, gegebenenfalls unter Verwendung von
Spanbrechern auf dem Schneidwerkzeug, der abgetragene Span
vor der Schweissnaht in kurze Späne zerlegt wird. Bei der
beim Abtragen der Schweissnaht entstehenden grossen Spanmenge - es werden Schweissgeschwindigkeiten bis etwa 50
m/Min. erreicht - ist es erforderlich, dass diese Menge in
kurzen Spänen anfällt, ansonst sie kaum wegzubringen wäre.
Wird jedoch der abgetragene Span in kurze Späne zerlegt,
kann er, siehe Fig. 1, durch einen Spanabfuhrkanal 25 in
einen Behälter 26 geleitet werden, von wo aus der Abtransport erfolgen kann.

Es ist möglich, den seitlichen Vorschub der Schneide 23
und auch den Wechsel eines Schneidwerkzeuges auf das
nächste Werkzeug motorisch durchzuführen, indem die Handgriffe 18, 19, 20 durch entsprechende Antriebe mit einer
entsprechenden Steuerung ersetzt werden. Hierbei kann
auch ein kontinuierlicher Vorschub der Schneide 23 vorgesehen werden. Weiter kann auch mehr als nur eine einzige Schneide 23 im Eingriff stehen. In diesem Fall wird
der abzutragende Span in Teilspänen abgetragen.

Das beschriebene Verfahren und die Maschine eignen sich
auch für die Verbindung von offenen Profilen, Halbschalen,
Vierkantrohren, Verbindungen von Rohren mit Profilen und
von Körpern mit ähnlichen geometrischen Formen.

Patentansprüche

1. Verfahren zur Bearbeitung eines kontinuierlich bewegten Rohres (6), das aus einem endlosen, metallischen Band geformt und an seinen Längskanten zusammengeschweisst wird, an der beim Schweissen gebildeten Längsschweissnaht (24), deren über das Rohrprofil vorstehender Teil während des Durchlaufes des Rohres an einer stationären Bearbeitungsstelle mit mindestens einem Schneidwerkzeug (17) abgetragen wird, dadurch gekennzeichnet, dass an dem Schneidwerkzeug (17) ohne Unterbrechung der Herstellung des Rohres (6) in vorbestimmten, von dem Grad der Abnützung eines jeweils im Einsatz stehenden Abschnittes der Schneide (23) des Schneidwerkzeuges abhängigen Zeitintervallen ein benachbarter, intakter Abschnitt der Schneide zum Einsatz gebracht wird.

2. Verfahren nach Anspruch 1, dadurch gekennzeichnet, dass der Spanwinkel des Schneidwerkzeugs (17) derart eingestellt wird, dass der von der Schweissnaht abgetragene Span in kurze Späne zerlegt wird, die durch eine Spanabführung (25) von der Einsatzstelle des Schneidwerkzeuges (17) abgeleitet und entfernt werden.

3. Verfahren nach Anspruch 1 oder 2, dadurch gekennzeichnet, dass das Schneidwerkzeug (17) von Schneidenabschnitt zu Schneidenabschnitt mit unveränderter Einstellung bezüglich der Schweissnaht (24) verstellt wird.

4.  Maschine zur Durchführung des Verfahrens nach einem
    der Ansprüche 1 bis 3 mit drehbar gelagerten Führungs- und Stützrollen (4, 5, 7) für das durchlaufende, geschweisste Rohr, dadurch gekennzeichnet, dass
    an einem Maschinenständer (2) ein Schlitten (10) in
    einer vertikalen Schlittenführung (8, 9) höheneinstellbar geführt ist, an dem mit einer horizontalen
    Schlittenführung (11, 12) ein Werkzeugschlitten (15)
    seiteneinstellbar geführt ist, der einen Werkzeughalter (16) mit mindestens einem Schneidwerkzeug (17)
    trägt.

5.  Maschine nach Anspruch 4, dadurch gekennzeichnet,
    dass die vertikale und die horizontale Schlittenführung als Säulenführungen (8, 9; 11, 12) ausgebildet sind.

6.  Maschine nach Anspruch 4 oder 5, dadurch gekennzeichnet, dass der Werkzeughalter (16) ein drehbarer und indexierbarer Schneidkopf ist, der mit
    einer Anzahl etwa radial befestigter Schneidstähle
    oder Schneideinsätze (17) ausgerüstet ist.

7.  Maschine nach Anspruch 6, dadurch gekennzeichnet,
    dass die jeweilige indexierbare Stellung des Schneidkopfes (16) zwecks Einstellung des Spanwinkels der
    Schneide (23) der Schneidstelle bzw. der Schneideinsätze (17) verstellbar ist, z.B. mittels eines drehbaren, exzentrisch gelagerten Indexierbolzens (20).

Fig. 1

Fig 2

Fig 3

1/1

0158692

# EUROPÄISCHER RECHERCHENBERICHT

Europäisches
Patentamt

## EINSCHLÄGIGE DOKUMENTE

| Kategorie | Kennzeichnung des Dokuments mit Angabe  soweit erforderlich. der maßgeblichen Teile | Betrifft Anspruch | KLASSIFIKATION DER ANMELDUNG (Int. Cl. 4) |
|---|---|---|---|
| X | US-A-1 678 963  (M.H. SUSSMAN) <br> * Insgesamt * | 1,2,4 | B 23 D  79/02 <br> B 23 K  35/40 <br> B 21 C  37/08 |
| X | US-A-2 959 842  (R.A. MEYERS) <br> * Patentansprüche; Figuren * | 1,2,4 | |
| X | PATENTS ABSTRACTS OF JAPAN, Band 7, Nr. 92, 16. April 1983, Seite (M-208)(1237); & JP - A - 58 15612 (MITSUBISHI) 29.01.1983 | 1,4 | |
| A,D | EP-A-0 003 370  (V.B.F.) | | |
| A | US-A-2 442 087  (E.M. KENNEDY) <br><br> * Figur 4 * | | RECHERCHIERTE SACHGEBIETE (Int. Cl. 4) |
| A | DE-C-  575 811  (KRONPRINZ) | | B 23 D <br> B 23 K <br> B 21 C |
| A | PATENTS ABSTRACTS OF JAPAN, Band 3, Nr. 33, 20. März 1979, Seite 27 M 52; & JP - A - 54 5279 (KOGYO GIJUTSUIN) 16.01.1979 | 6 | |

Der vorliegende Recherchenbericht wurde für alle Patentansprüche erstellt.

| Recherchenort | Abschlußdatum der Recherche | Prüfer |
|---|---|---|
| DEN HAAG | 29-11-1984 | MOLLET G.H.J. |